# EUROPÄISCHE PATENTSCHRIFT

(11) **EP 0 797 520 B1**
(45) Veröffentlichungstag und Bekanntmachung des Hinweises auf die Patenterteilung: **01.12.1999**
(21) Anmeldenummer: 95942701.4
(22) Anmeldetag: 19.12.1995
(51) Int. Cl.: B60T 8/48, B60T 8/24, B60T 11/20, B60T 11/232, B60T 11/26, B60T 13/565

(54) **HYDRAULISCHE KRAFTFAHRZEUGBREMSANLAGE**
HYDRAULIC BRAKING SYSTEM FOR MOTOR VEHICLES
SYSTEME HYDRAULIQUE DE FREINAGE POUR VEHICULES A MOTEUR

(30) Priorität: 24.12.1994 DE 4446525
(43) Veröffentlichungstag der Anmeldung: 01.10.1997
(60) Teilanmeldung: 99101641.1
(73) Patentinhaber: Continental Teves AG & Co. oHG, 60488 Frankfurt (DE)
(72) Erfinder: VOLZ, Peter, D-64291 Darmstadt (DE); DINKEL, Dieter, D-65817 Eppstein (DE); HINZ, Axel, D-61267 Neu-Anspach (DE); STEFFES, Helmut, D-65795 Hattersheim (DE); BURGDORF, Jochen, D-63075 Offenbach (DE)
(86) Internationale Anmeldenummer: EP9505028
(87) Internationale Veröffentlichungsnummer: WO9620102

(56) Entgegenhaltungen:
- EP-A- 0 072 745
- EP-A- 0 303 470
- EP-A- 0 448 031
- EP-A- 0 460 408
- EP-A- 0 482 367
- WO-A-91/16221
- WO-A-92/17357
- DE-A- 2 208 936
- DE-A- 3 424 912
- DE-A- 3 502 473
- DE-A- 3 633 687
- DE-A- 3 923 742
- DE-A- 3 936 180
- DE-A- 4 016 561
- DE-A- 4 213 740
- DE-A- 4 238 333
- DE-A- 4 309 470
- DE-C- 4 232 311
- DE-C- 4 329 139
- DE-C- 4 329 140
- FR-A- 2 601 311
- FR-A- 2 636 905
- GB-A- 2 147 963
- GB-A- 2 196 709
- GB-A- 2 259 122
- US-A- 4 871 215
- US-A- 5 234 263
- PATENT ABSTRACTS OF JAPAN vol. 14, no. 266 (M-0982), 8.Juni 1990 & JP,A,02 077350 (AKEBONO BRAKE IND CO), 16.März 1990,
- PATENT ABSTRACTS OF JAPAN vol. 15, no. 203 (M-1116), 24.Mai 1991 & JP,A,03 054057 (TOKICO), 8.März 1991,

## Beschreibung

Die Erfindung betrifft eine hydraulische Kraftfahrzeugbremsanlage zur Fahrstabilitätsregelung und/oder Antriebsschlupfregelung mit einem nach dem Rückförderprinzip arbeitenden Blockierschutzsystem (ABS), einem von einem Bremspedal betätigbaren Bremsdruckgeber, der aus einem Bremskraftverstärker und einem dem Bremskraftverstärker nachgeschalteten, mit einem Druckmittelvorratsbehälter in Verbindung stehenden zweikreisigen Hauptbremszylinder besteht, gemäß dem Oberbegriff von Anspruch 1.

Eine derartige hydraulische Kraftfahrzeugbremsanlage ist z.B. aus der DE-PS 43 29 139 bekannt, bei der als Bremsdruck-Steuergerät ein als Tandem-Hauptzylinder ausgebildeter statischer Hauptzylinder mit den Bremskreisen einzeln zugeordneten Druckausgängen vorgesehen ist. Die Fahrstabilitätsregeleinrichtung arbeitet nach dem Prinzip, durch elektronisch gesteuerte, selbsttätige Aktivierung einer oder mehrerer Radbremsen den Längs- und den Seitenschlupf der Fahrzeugräder innerhalb mit dynamischer Stabilität des Fahrzeuges insgesamt verträglicher Grenzen zu halten. Als Druckquelle, aus der im Fall eines Fahrstabilitätsregelbetriebes die für die Regelung eingesetzten Radbremsen mit Bremsdruck beaufschlagbar sind, werden die Rückförderpumpen des Blockierschutzsystems ausgenutzt, die eingangsseitig mit dem Ausgangsdruck einer auf relativ niedrigem Ausgangsdruckniveau arbeitenden, vorzugsweise elektrisch angetriebenen Vorladepumpe beaufschlagbar sind.

Zur hydraulischen Trennung der beiden Bremskreise sind diesen einzeln zugeordnete Vorladezylinder vorgesehen, die je einen Kolben aufweisen, der einen Ausgangsdruckraum, der über ein elektrisch ansteuerbares Vorlade-Steuerventil mit der Saugseite der Rückförderpumpe des jeweiligen Bremskreises verbindbar ist, gegen einen Antriebsdruckraum, an den der Druckausgang der Vorladepumpe angeschlossen ist, druckdicht abgrenzt und zwei in axialem Abstand voneinander angeordnete Flansche hat, zwischen denen sich ein mit je einem der Druckausgänge des Bremsgerätes in ständig kommunizierender Verbindung gehaltener Nachlaufraum erstreckt, wobei der Kolben des jeweiligen Vorladezylinders mit einem mechanisch betätigbaren Ventil versehen ist, das auch die Funktion eines Rückschlagventils erfüllt, das einen den Nachlaufraum mit dem Ausgangsdruckraum verbindenden Durchflußkanal des Kolbens sperrt, solange der Druck im Ausgangsdruckraum des jeweiligen Vorladezylinders größer ist als in dem Nachlaufraum und diesen Durchflußkanal freigibt, wenn der in dem Nachlaufraum herrschende Hauptbremszylinder-Ausgangsdruck größer ist als der Druck im Ausgangsdruckraum des Vorladezylinders. Zwischen den Druckausgang des jeweiligen Vorladezylinders und die Hauptbremsleitung des über diesen druckversorgten Bremskreises ist jeweils ein elektrisch ansteuerbares Umschaltventil geschaltet, das stromlos offen und im erregten Zustand, der dem Fahrstabilitätsregelbetrieb zugeordnet ist, geschlossen ist. Die Saugseiten der beiden Rückförderpumpen sind an die Hauptbremsleitung des jeweiligen Bremskreises über je ein Rückschlagventil angeschlossen, das durch relativ höheren Druck in der Rücklaufleitung des jeweiligen Bremskreises als an der Saugseite seiner Rückförderpumpe in Öffnungsrichtung beaufschlagt und sonst sperrend ist. Die beiden Vorladezylinder haben einen gemeinsamen, an den Druckausgang der Vorladepumpe angeschlossenen Antriebsdruckraum, der durch Ansteuerung eines stromlos offenen Magnetventils von dem Druckmittelvorratsbehälter der Bremsanlage trennbar ist.

Als nachteilig ist bei der vorbekannten Bremsanlage der erhebliche technische Aufwand und der erforderlich Raumbedarf anzusehen, der mit den beiden Vorladezylindern verknüpft ist. Außerdem ist die vorbekannte Bremsanlage, verglichen mit einem Fahrzeug, das mit einem Blockierschutzsowie einem Antriebsschlupfregelsystem ausgerüstet ist, das eine selbsttätige Aktivierung lediglich der Radbremsen der angetriebenen Fahrzeugräder ermöglicht, wesentlich komplizierter aufgebaut und auch entsprechend teurer. Es kommt hinzu, daß bei einer solchen Bremsanlage wegen der zusätzlichen Vorladezylinder auch zusätzliche hydraulische Kammern vorhanden sind, aus denen Gasblasen, die sich bei starker thermischer Belastung der Radbremsen bilden können, nur schwer entweichen können, was insbesondere dann gilt, wenn die beiden Vorladezylinder zu einer symmetrischen Baueinheit zusammengefaßt sind und daher die für eine einigermaßen gute Enlüftbarkeit beider Vorladezylinder günstigste Anordnung derselben allenfalls im Sinne eines bestmöglichen Kompromisses getroffen werden kann.

Es ist daher Aufgabe der vorliegenden Erfindung, eine hydraulische Kraftfahrzeugbremsanlage der eingangs genannten Gattung dahingehend zu verbessern, daß eine Reduzierung des Kosten- als auch des Bauraumaufwands bei gleichzeitiger Erhöhung deren Funktionszuverlässigkeit erreicht werden kann.

Nach der erfindungsgemäßen Lösung der gestellten Aufgabe weisen die erwähnte Rückförderpumpe und die Hilfsdruckpumpe einen gemeinsamen Antrieb auf. Durch diese Maßnahme wird eine kostengünstige, besonders raum- und gewichtssparende Energieversorgungseinheit geschaffen, wobei statt der hydraulischen Vorladepumpe eine Unterdruckpumpe Verwendung finden kann, die als Energiequelle für einen pneumatischen Antriebsszylinder dient, dem der Vorladezylinder nachgeschaltet ist. Der hydraulischen Vorladepumpe kann ein zweiter Druckmittelvorratsbehälter zugeordnet sein, wobei die Verbindung zwischen der Saugseite der Vorladepumpe und dem zweiten Druckmittelvorratsbehälter absperrbar ist. Das Absperren der erwähnten Verbindung erfolgt dabei vorzugsweise mittels eines elektromagnetisch betätigbaren 2/2-Wegeventils, wobei zwischen dem zweiten Druckmittelvorratsbehälter und der Druckseite der Vorladepumpe eine Drossel geschaltet ist.

Weitere Vorteile und Merkmale der erfindungsgemäßen hydraulischen Kraftfahrzeugbremsanlage ergeben sich aus der nachfolgenden Beschreibung eines Ausführungsbeispieles anhand der beiliegenden Zeichnung.

Es zeigt:

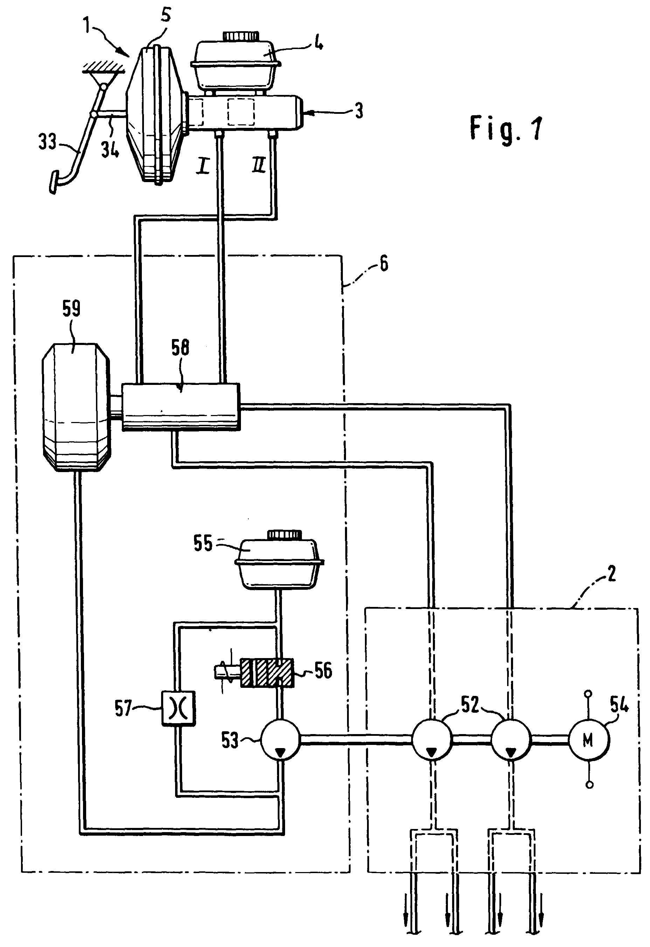

- Fig. 1: eine blockiergeschützte Kraftfahrzeugbremsanlage nach der Erfindung.

Die in der Zeichnung dargestellte erfindungsgemäße Bremsanlage weist zwei Bremskreise I und II auf, deren Aufbau völlig identisch ist, so daß die folgende Beschreibung eines Bremskreises ebenso auf den anderen zutrifft. Die gezeigte Bremsanlage besteht im wesentlichen aus einem Bremsdruckgeber 1, an den über nicht näher bezeichnete hydraulische Leitungen Radbremszylinder anschließbar sind, einem zwischen dem Bremsdruckgeber 1 und den Radbremsen geschalteten Hydroaggregat 2, sowie einem nicht gezeigten elektronischen Regler mit zugehöriger Sensorik. Die Zuordnung der Radbremszylinder zu den einzelnen Bremskreisen I, II ist derart getroffen, daß der erste Radbremszylinder entweder einem Rad einer Fahrzeugachse und der andere Radbremszylinder dem diagonal gegenüberliegenden Rad der anderen Fahrzeugachse zugeordnet ist (diagonale Aufteilung der Bremskreise) oder aber beide Radbremszylinder derselben Fahrzeugachse zugeordnet sind (Schwarzweiß-Aufteilung der Bremskreise).

Der vom Fahrer des Kraftfahrzeugs mittels eines Bremspedals 33 betätigbare Druckgeber 1 besteht aus einem pneumatischen Bremskraftverstärker 5, dem ein Hauptbremszylinder, vorzugsweise ein Tandemhauptzylinder 3 nachgeschaltet ist, dessen Druckräume mit einem Druckmittelvorratsbehälter 4 verbindbar sind. An das Bremspedal 33 ist eine Betätigungsstange 34 angekoppelt, die eine Betätigung eines nicht dargestellten Steuerventils durch den Fahrzeugfahrer ermöglicht, das den Aufbau eines pneumatischen Differenzdruckes im Gehäuse des Unterdruckbremskraftverstärkers 5 steuert.

Ein Hydraulikaggregat 2 weist ein Motor-Pumpen-Aggregat auf, das aus einer durch einen Elektromotor 54 angetriebenen hydraulischen Rückförderpumpe 52 besteht.

Um im Bedarfsfall, beispielsweise bei sehr niedrigen Temperaturen, der Rückförderpumpe 52 das Druckmittel unter einem höheren Druck zur Verfügung zu stellen, bzw. ein Vorfüllen der Radbremsen zu erreichen, ist eine Hilfsdruckquelle 6 vorgesehen.

Bei der in Fig. 1 dargestellten erfindungsgemäßen Kraftfahrzeugbremsanlage ist die Hilfsdruckquelle 6 zwischen dem Hauptbremszylinder 3 und dem Hydroaggregat 2 angeordnet und besteht aus einer Hilfsdruckpumpe 53, einem an die Druckseite der Hilfs-druckpumpe 53 angeschlossenen hydraulischen Antrieb 59 sowie einen vom Antrieb 59 betätigbaren, zweikreisigen Vorladezylinder 58. Die Besonderheit dieser Ausführung besteht darin, daß die im Hydroaggregat 2 integrierte Rückförder-pumpe 52 sowie die Hilfsdruckpumpe 53 einen gemeinsamen Antrieb aufweisen, der im dargestellten Beispiel durch einen Elektromotor 54 gebildet ist.

Wie der Fig. 1 weiter zu entnehmen ist, ist der Hilfsdruckpumpe 53 ein zweiter Druckmittelvorratsbehälter 55 zugeordnet, dessen Verbindung mit der Saugseite der Hilfsdruckpumpe 53 mittels eines vorzugsweise elektromagnetisch betätigbaren 2/2-Wegeventil 56 abgesperrt werden kann. Der zweite Druckmittelvorratsbehälter 55 kann jedoch entfallen, wenn eine direkte Verbindung mit großem Querschnitt zwischen dem 2/2-Wege bzw. Ladeventil 56 und dem ersten Druckmittelvorratsbehälter 4 hergestellt wird.

Im Falle einer Fremdbremsung wird in bekannter Weise der Elektromotor 54 gestartet und das Ladeventil 56 umgeschaltet. Die vorzugsweise im Hydroaggregat 2 integrierte Hilfsdruckpumpe 53 liefert, aus dem zweiten Druckmittelvorratsbehälter 55 Druckmittel ansaugend, einen Druckmittelstrom, mit dem der hydraulische Antrieb 59 beaufschlagt wird, so daß im Vorladezylinder 58 ein Vorladedruck aufgebaut wird. Nach Beendigung der Fremdbremsung wird das 2/2-Wege- bzw. Ladeventil 56 geschlossen und der in der Verbindungsleitung zwischen der Hilfsdruckpumpe 53 und dem hydraulischen Antrieb 59 herrschende Hilfsdruck wird über eine an der Druckseite der Hilfsdruckpumpe 53 angeschlossene Drossel 57 abgebaut.

Denkbar ist allerdings auch eine Ausführung, bei der die Hilfsdruckpumpe 53 als Vakuumpumpe ausgelegt wird, die dann mit einem dem Vorladezylinder 58 vorgeschalteten Vakuumantrieb zusammenwirkt.

### Bezugszeichenliste:

- 1: Bremsdruckgeber
- 2: Hydraulikaggregat
- 3: Hauptbremszylinder
- 4: Druckmittelvorratsbehälter
- 5: Bremskraftverstärker
- 6: Hilfsdruckquelle
- 33: Bremspedal
- 34: Betätigungsstange
- 52: Rückförderpumpe
- 53: Hilfsdruckpumpe
- 54: Elektromotor
- 55: Druckmittelvorratsbehälter
- 56: 2/2-Wegeventil
- 57: Drossel
- 58: Vorladezylinder
- 59: Antrieb

## Patentansprüche

1. Hydraulische Kraftfahrzeugbremsanlage zur Fahrstabilitäts- und/ oder Antriebsschlupfregelung, mit einem nach dem Rückförderprinzip arbeitenden Blockierschutzsystem, einem von einem Bremspedal (33) betätigbaren Bremsdruckgeber (1), der aus einem Bremskraftverstärker (5) sowie einem dem Bremskraftverstärker (5) nachgeschalteten, mit einem Druckmittelvorratsbehälter (4) in Verbindung stehenden zweikreisigen Hauptbremszylinder (3) besteht, an dessen Druckräume über ein eine Rückförderpumpe (52) aufweisendes Hydraulikaggregat (2) den einzelnen Fahrzeugrädern zugeordnete Radbremsen angeschlossen sind, sowie mit einer Hilfsdruckquelle (6), die wirkungsmäßig zwischen dem Hauptbremszylinder (3) und dem Hydraulikaggregat (2) angeordnet ist, durch eine Hilfsdruckpumpe (53) sowie mindestens einen Vorladezylinder (58) gebildet ist und deren Druckmittelstrom wahlweise den Radbremsen oder der Saugseite der Rückförderpumpe (52) zuführbar ist, dadurch **gekennzeichnet**, daß die Rückförderpumpe (52) sowie die Hilfsdruckpumpe (53) einen gemeinsamen Antrieb (54) aufweisen.

2. Hydraulische Kraftfahrzeugbremsanlage nach Anspruch 1 dadurch **gekennzeichnet**, daß der Hilfsdruckpumpe (53) ein zweiter Druckmittelvorratsbehälter (55) zugeordnet ist und daß die Verbindung zwischen ihrer Saugseite und dem zweiten Druckmittelvorratsbehälter (55) absperrbar ist.

3. Hydraulische Kraftfahrzeugbremsanlage nach Anspruch 2 dadurch **gekennzeichnet**, daß der Hilfsdruckpumpe (53) ein elektromagnetisch betätigbares 2/2-Wege-ventil (56) vorgeschaltet ist, wobei zwischen dem zweiten Druckmittelvorratsbehälter (55) und der Druckseite der Hilfsdruckpumpe (53) eine Drossel (57) geschaltet ist.

## Claims

1. Hydraulic automotive vehicle brake system for driving stability control and/or traction slip control which includes an anti-lock system operating according to the recirculation principle, a braking pressure generator (1) operable by a brake pedal (33) which is comprised of a brake force booster (5) and a dual-circuit master brake cylinder (3) which is connected downstream of the brake force booster (5) and is in communication with a pressure fluid supply reservoir (4), wherein wheel brakes associated with the individual vehicle wheels are connected to the pressure chambers of master brake cylinder (3) by way of a hydraulic unit (2) having a return pump (52), and an auxiliary pressure source (6) which is interposed between the master brake cylinder (3) and the hydraulic unit (2) in terms of effect, which is provided by an auxiliary pressure pump (53) and at least one precharging cylinder (58) and the pressure fluid flow of which can be supplied selectively to the wheel brakes or the suction side of the return pump (52),
**characterized** in that the return pump (52) and the auxiliary pressure pump (53) have one joint drive (54).

2. Hydraulic automotive vehicle brake system as claimed in claim 1,
**characterized** in that a second pressure fluid supply reservoir (55) is associated with the auxiliary pressure pump (53), and in that the connection between its suction side and the second pressure fluid supply reservoir (55) can be shut off.

3. Hydraulic automotive vehicle brake system as claimed in claim 2,
**characterized** in that an electromagnetically operable two-way/two-position directional control valve (56) is connected upstream of the auxiliary pressure pump (53), and a throttle (57) is interposed between the second pressure fluid supply reservoir (55) and the pressure side of the auxiliary pressure pump (53).

## Revendications

1. Système hydraulique de freinage pour véhicules à moteur, pour la régulation de la stabilité de marche et/ou la régulation antipatinage, comprenant un système antiblocage fonctionnant selon le principe de refoulement, comprenant un transmetteur de pression de freinage (1) pouvant être actionné par une pédale de frein (33), qui est constitué d'un amplificateur de frein (5) ainsi que d'un maître-cylindre de frein (3) à deux circuits, monté à la suite de l'amplificateur de frein (5), relié à un réservoir de fluide hydraulique (4) et aux chambres de pression duquel sont raccordés, par l'intermédiaire d'un groupe hydraulique (2) présentant une pompe de refoulement (52), des freins de roue associés aux différentes roues du véhicule, et comprenant une source de pression auxiliaire (6), disposée opérationnellement entre le maître-cylindre de frein (3) et le groupe hydraulique (2), constituée d'une pompe de pression auxiliaire (53) et d'au moins un cylindre de précharge (58) et dont le flux de fluide hydraulique peut être apporté sélectivement aux freins de roue ou au côté d'aspiration de la pompe de refoulement (52), **caractérisé** en ce que la pompe de refoulement (52) ainsi que la pompe de pression auxiliaire (53) présentent un entraînement commun (54).

2. Système hydraulique de freinage pour véhicules à moteur selon la revendication 1, **caractérisé** en ce qu'un deuxième réservoir de fluide hydraulique (55) est associé à la pompe de pression auxiliaire (53), et en ce que la liaison entre son côté d'aspiration et le deuxième réservoir de fluide hydraulique (55) peut être fermée.

3. Système hydraulique de freinage pour véhicules à moteur selon la revendication 2, **caractérisé** en ce que la pompe de pression auxiliaire (53) est précédée d'un distributeur 2/2 voies (56) à actionnement électromagnétique, un étranglement (57) étant monté entre le deuxième réservoir de fluide hydraulique (55) et le côté de refoulement de la pompe de pression auxiliaire (53).
